# EUROPEAN PATENT SPECIFICATION

(11) **EP 2 070 000 B1**
(45) Date of publication and mention of the grant of the patent: **16.03.2011**
(21) Application number: 07836369.4
(22) Date of filing: 31.07.2007
(51) Int. Cl.: G06K 7/00, G06K 17/00, G07C 9/00, H04L 12/56

(54) **DISTRIBUTED RADIO FREQUENCY IDENTIFICATION READER**
VERTEILTE FUNKFREQUENZIDENTIFIKATIONS-LESEVORRICHTUNG
LECTEUR D'IDENTIFICATION PAR RADIOFRÉQUENCES DISTRIBUÉES

(30) Priority: 29.09.2006 US 848220 P
(43) Date of publication of application: 17.06.2009
(73) Proprietor: Sensormatic Electronics Corporation, Boca Raton, Florida 33487 (US)
(72) Inventor: ALICOT, Jorge, F., Davie, FL 33331 (US); MAITIN, Steven, R., Lake Worth, FL 33467 (US); DEVOE, Ronald, F., Miami, FL 33147 (US); JONES, Donald, E., Jupiter, FL 33477 (US)
(74) Representative: Hafner, Dieter
(86) International application number: PCT/US2007/017111
(87) International publication number: WO 2008/042036

(56) References cited:
- US-A- 5 952 922
- US-A1- 2001 030 625
- US-A1- 2003 007 473
- US-A1- 2003 174 099
- US-A1- 2005 156 039
- US-A1- 2005 280 509
- US-B1- 6 318 636

## Description

### FIELD OF THE INVENTION

The present invention relates to field of radio frequency identification ("RFID") communications, and in particular to a distributed deployment of RFID circuits and methodologies.

### BACKGROUND OF THE INVENTION

Radio frequency identification ("RFID") systems are used in a wide variety of applications, and provide convenient mechanisms for the tracking, identification, and authentication of persons or objects. A RFID system typically includes one or more readers (also commonly referred to as interrogators) deployed at selected locations in an installation. Readers are typically deployed where it is desired to control or to receive information about objects or persons bearing or associated with RFID tags (also commonly referred to as markers or transponders). For example, readers may be deployed so as to cover entrances and exits, inventory control points, transaction terminals, and the like. Each reader is capable of receiving information from RFID tags with each tag typically being associated with an object or person. A tag may be affixed to or embedded in an object with which it is associated, or be part of a badge, card, or token given to a person. Signals conveyed between the tag and the reader, allow the reader to sense information on the tag. This information may include, for example, authentication or identification information, or may include instructions, such as a sequence of processes or operations to be conducted upon an object bearing the tag.

Each tag may include stored information that is communicated wirelessly to the reader. Tags typically carry information in onboard memory such as read only memory ("ROM") or nonvolatile programmable memory such as electrically erasable programmable read only memory ("EEPROM") and the amount of information may range from a single bit to kilobits or even more. Single bit tags typically serve as surveillance devices, such as theft prevention tags. Information amounting to a few bits or tens of bits may serve as an identifier, such as may be found in a badge or smart card, while information amounting to kilobits may comprise a portable data file that can be used for identification, communication, or control. The reader may, for example, extract information from a tag and use it for identification, or may store or convey the information to a responsible party. Alternatively, a data file may include a set of instructions that may initiate or control processes or actions without recourse to, or in coordination with, information stored elsewhere.

A tag typically includes a wireless communication device, for example a transmitter or transponder, which is capable of wirelessly communicating stored information to the reader. The tag may communicate the information independently or in response to a signal, such as an interrogation signal, received from the reader. Both active and passive tags are known in the art. An active tag has an onboard power source, while a passive tag may operate without an internal power source, deriving its operating power from a field generated by the reader. Passive tags are much lighter and less expensive than active tags and may offer a virtually unlimited operational lifetime. However, passive tags typically have shorter read ranges than active tags and require a higher-powered reader. Passive tags are also constrained in their capacity to store data and their ability to perform well in electromagnetically noisy environments.

A passive tag typically includes memory, which may be read only memory ("ROM") nonvolatile programmable memory such as electrically erasable programmable read only memory ("EEPROM"), or random access memory ("RAM"), depending on the applications to which the tag is to be put. Programmable memory used by a passive tag should be nonvolatile, so that data is not lost when the tag is in a powered down state. When the tag is not actively communicating with the reader, the tag is in a powered down state.

One commonly used implementation of a passive RFID tag includes analog or digital circuitry for processing signals received from and sent to the reader, as well as an antenna for communicating with a compatible reader, for example by electromagnetic coupling. The antenna may also be referred to as a coil. Communication through electromagnetic coupling typically involves superimposing the data upon a rhythmically varying field or carrier wave, which is, using the data to modulate the carrier wave. The carrier wave may suitably be a sinusoidal wave.

In order to receive data from a passive tag or transponder that communicates through electromagnetic coupling, the reader generates a magnetic field, typically using a reader antenna that electromagnetically couples to the transponder antenna. The magnetic field induces a voltage in the transponder antenna, thereby supplying power to the transponder. Data may suitably be transmitted to the reader by changing one parameter of the transmitting field. This parameter may be amplitude, frequency or phase.

The passive tag communicates with the reader by changing the load on the transmitting field. Load changes may suitably affect either the amplitude or phase of the field. These changes to the field are sensed by the reader antenna, which produces a modulated current in response to the field. This current is analyzed, for example, demodulated, to extract the data, which is then used in ways called for by the design of the particular RFID system.

RFID systems may employ multiple pedestals with a plurality of antennas and a reader internally attached. For some electronic article surveillance ("EAS") systems that do not currently have RFID capability but now desire to incorporate

it, this can be a particular problem due to the size of the RPID reader, the complexity of integration of the RPID reader and the cost of modifying the current equipment such as an EAS entry/exit pedestal or point-of-sale ("POS") system to include a costly standalone RFID reader.

US 5,952,922 discloses a radio frequency identification (RFID) system for communication with remote communication devices. The system comprises a radio engine module including a signal generator, a receiver and a controller, which is capable to communicate over a network to a plurality of interrogators, which communicate with one or more of the remote devices. I

The system disclosed can operate in several modes, which are a Downlink message mode, an Uplink message mode, an Uplink message transmit mode and an Uplink message interpretation mode (column 6, lines 64 - column 7, line 5).

A similar system is disclosed in US 2005/0280509 A1.

There exists, therefore, a need for systems and techniques that will allow for the deployment of RFID capabilities without requiring costly modifications to the current equipment such as an EAS entry/exit pedestal or POS system to integrate a standalone RFID reader. The system should be operable in more different modes.

### SUMMARY OF THE INVENTION

The invention is defined by the independent claims which have been delimited against US 5,952,922 cited above.

Preferred embodiments are set out in the dependent claims.

### BRIEF DESCRIPTION OF THE DRAWINGS 25

A more complete understanding of the present invention, and the attendant advantages and features thereof, will be more readily understood by reference to the following detailed description when considered in conjunction with the accompanying drawings, wherein like designations refer to like elements, and wherein:
FIG. 1 is a block diagram of a communication system constructed in accordance with the principles of the present invention;
FIG. 2 is a block diagram of various aspects of the communication system of FIG. 1 constructed in accordance with the principles of the present invention; and
FIG. 3 is a block diagram of the controller processor module and the radio engine module of a communication system constructed in accordance with the principles of the present invention.

### DETAILED DESCRIPTION OF THE INVENTION

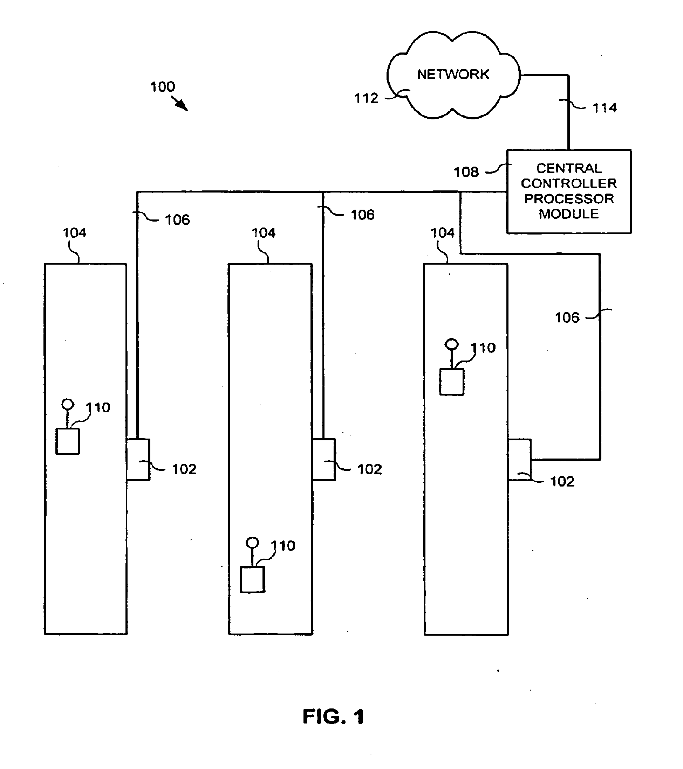

Referring now to the drawing figures in which like reference designators refer to like elements, there is shown in FIG. 1 a diagram of an exemplary system constructed in accordance with the principles of the present invention and designated generally as "100". System 100 includes a plurality of radio engine modules ("REM") 102 constructed in accordance with the teachings of the present invention as discussed further below. REMs 102 are each deployed at an appropriate location in an installation zone, such as a retail store, an inventory warehouse, a building for which security is to be provided, or the like. In this embodiment, REMs 102 are deployed at entrances, such as a door at a loading dock for receiving deliveries and monitor interrogation zones 104. Each of the REMs 102 communicates via a communication link 106 with a central station controller processor module 108. In this embodiment, communication link 106 is an air interface link that uses, for example, a radio access protocol ("RAP") to transmit control commands, configuration commands, search commands, tag commands, tag data, and the like between REMs 102 and central station controller processor module 108. In one embodiment, communication link 106 can be an Institute of Electrical and Electronics ("IEEE") 802.11 wireless local area network ("WLAN"). Each of the REMs 102 also communicates with any compatible RFID communication devices 110, e.g., RFID tags, that are brought within interrogation zone 104, which may be attached to objects or people for example, and each tag is programmed with information relating to the object or person to which it is attached.

Central station controller processor 108 communications with each of the plurality of REMs 102, and commands the operation of the plurality of REMs 102. Controller processor module 108 further controls the transmission of data from the plurality of REMs 102 to the network 112 via a communication link 114. Network 112 can be the network of a customer, which provides communication with various systems and subsystems, such as an inventory control computer (not shown) or a monitoring subsystem (not shown). Communication link 114 can be a wired or wireless link such as an IEEE 802.3 Ethernet local area network ("LAN") or an IEEE 802.11 wireless local area network ("WLAN"). In one embodiment, the communication link 114 is an Ethernet link that provides a power source for the controller processor module 108, which can be referred to as power over Ethernet ("POE"). In other embodiments, the power source for the controller processor module 108 can be supplied by traditional power supplies or other power outlets.

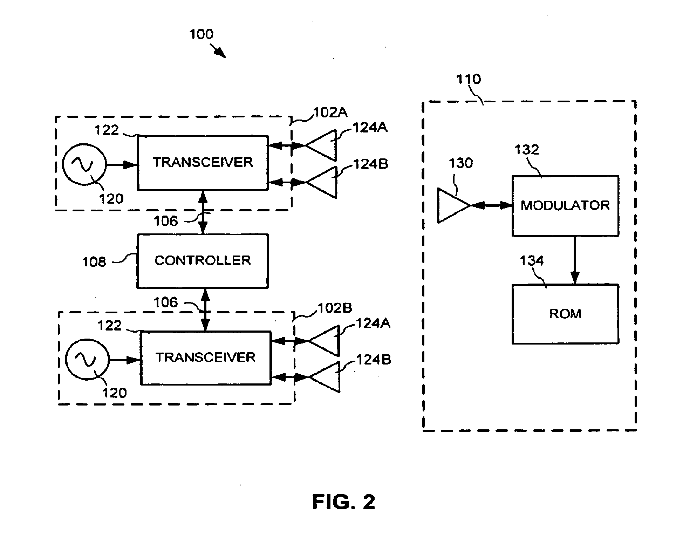

An exemplary embodiment of system 100 is explained in further detail with reference to FIG. 2. In this embodiment, system 100 includes two REM modules 102A and 102B (collectively referred to as REMs 102) and a controller processor module 108. REM module 102 includes a radio signal source 120 for synthesizing radio frequency signals, e.g., an interrogating RF signal, that outputs a RF signal to transceiver 122. The interrogating RF signal from the source 120 uses a suitable frequency such as 915 MHz. When the radio signal source 120 is energized, transceiver 122 transmits the interrogating RF signal (typically after the RF signal has been modulated with an information signal) through antenna 124A to a suitable antenna 130 such as a dipole antenna at a communication device 110.

Modulated signals are received from communication device 110 via antenna 124B and passed to transceiver 122. Controller processor module 108 receives the digital equivalent of the modulated signal. In one embodiment, controller processor module 108 produces signals in a sequence having a pattern identifying the pattern of the 1's and 0's in read only memory ("ROM") 134 of communication device 110. For example, the received and processed sequence may be compared in controller processor module 108 with a desired sequence to determine whether the object being identified is being sought by the controller processor module 108 or not.

Continuing to refer to FIG. 2, one embodiment of remote communication device 110 is explained. The depicted communication device 110 includes a modulator 132 having a receiver/transmitter as described below and a data source such as ROM 134, which provides a sequence of binary 1's and binary 0's in an individual pattern to identify the object. In this embodiment, a binary "1" in ROM 134 causes a modulator 132 to produce a first plurality of signal cycles and a binary "0" in the read only memory 134 causes the modulator 132 to produce a second plurality of signal cycles different from the first plurality of signals. The pluralities of signals cycles are sequentially produced by the modulator 132 to represent the pattern of binary 1's and binary 0's which identify the object are introduced to the dipole antenna 130 for transmission to antenna 124B at REM 102. In another embodiment, the communication device 110 can have separate receive and transmit antennas.

Communication device 110 may further include an optional power source (not shown) connected to modulator 132 to supply operational power to modulator 132.

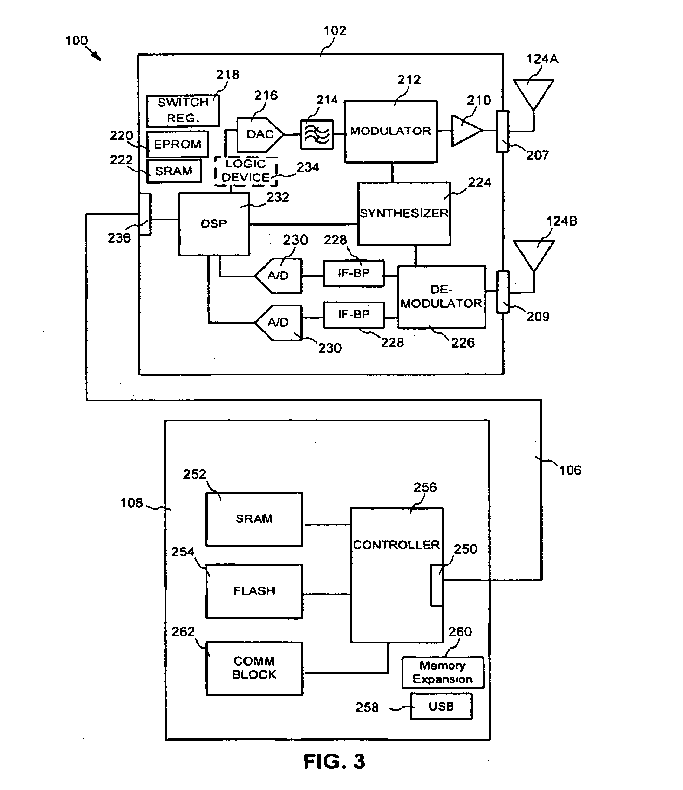

The exemplary embodiment of system 100 in FIG. 2 is described in further detail with reference to FIG. 3. As shown in FIG. 3, the system 100 includes a REM module 102 and a controller processor module 108. REM module 102 includes a signal-transmitting antenna 124A, a signal-receiving antenna 124B, a first radio frequency ("RF") interface 207, a second RF interface 209, a power amplifier 210, a modulator 212, a first band pass filter 214, a digital-to-analog converter ("DAC") 216, a switching regulator 218, an erasable programmable read-only memory ("EPROM") 220, a static random access memory ("SRAM") 222, a synthesizer 224, a demodulator 226, second and third band pass filters 228, analog-to-digital converters ("ADC") 230, a digital signal processor ("DSP") 232, an optional logic device ("LD") 234 and a communication port 236. The synthesizer 224 transmits a reference signal to the modulator 212 and demodulator 226 that can be used to synchronize, filter and/or adjust the received communication signals with the transmitted communication signals.

The modulator 212 receives the reference signal from the synthesizer 224 and inquiry data from the DSP 232. Prior to any modulation, DAC 216 converts the inquiry data from the DSP 232 via logic device 234 from a digital signal into an analog signal and provides the converted analog signal to the band pass filter 214, which can restrict a frequency-band of the converted analog signal to a predetermined frequency band. The modulator 212 modulates the reference signal in accordance with the inquiry data, and outputs this modulated signal to the power amplifier 210. The optional logic device 234 can perform a command signal wave-shaping function of the REM module 102 in order to allow the DSP 232 to free up additional processing bandwidth to perform other REM module 102 functions.

The power amplifier 210 amplifies the modulated signal received from the modulator 212, and outputs this amplified signal to the first RF interface 207. Subsequently, the signal-transmitting antenna 124A radiates the signal into air as radio-signals. Switching regulator 218 provides for the management of input power to the REM 102.

The signal-receiving antenna 124B receives radio-signals, and passes the received radio-signals to the demodulator 226 via the second RF interface 209. The demodulator 226 extracts information from the received radio-signals and passes the extracted information signals and received radio-signals to the second and third bandpass filters 228, which may restrict a frequency-band of the extracted information signals and received radio-signals to a predetermined frequency band. The second and third bandpass filters 228 pass the restricted radio-signals to the analog-to-digital converters 230, which can convert the filtered radio-signals into digital signals for processing by the DSP 232.

In this matter, the radio functionality of a typical RFID reader has been distributed in the REM 102, which in turn results in power consumption reduction, footprint size reduction and processing requirement reduction in providing RFID capability at the pedestal level of the various surveillance and detection systems. In addition, the distributed function deployment or module design allows for low cost integration and deployment configurations, provides an interface to current antenna offerings, allows identification of vendor antennas, and provides for antenna failure detection.

Continuing to refer to FIG. 3, controller processor module 108 includes a communication port 250 to interface with a wireless or wired connection 106 as previously described with respect to FIG. 1. The communication port 250 interfaces with communication port 236 of REM module 102 via communication link 106. Controller processor module 108 further includes a SRAM 252, a flash memory 254, a controller processor 256, a universal serial bus ("USB") 258, a memory expansion module 260 and a communications block 262.

Controller processor 256 can be any of various commercially available central processing units, and it provides the communication and signal processing of controller processor module 108, including the communications with one or more REM modules 102 via the communication port 250. Controller processor 256 employs SRAM 252 and flash memory 254 for typical storage of communication data and the like, as well as providing resources for the operating system ("OS"), e.g., Linux/CE, of the controller processor module 108. Of course, the present invention is not limited to such and other forms of non-volatile memory, such as disk drives can be used. Memory expansion module 254 provides for expanding the controller processor module 108 to serve as an application processor. Communications block 262 provides an interface for accessing communication link 114 to network 112, for example an Ethernet link or a wireless link as previously discussed with respect to FIG. 1.

Controller processor module 108 provides application processing for the RFID system as well as network communication control and signal routing. Controller processor module 108 can send several types of commands to REMs 102 including control commands, configuration commands, search request commands, inquiry commands, status commands and the like. Controller processor module 108 can send a control command to instruct a REM 102 to place itself in a desired operational mode. For example, controller processor module 108 can send a control command to one or more REMs 102 instructing the one or more REMs 102 to operate in a response only mode. In such a case, REM 102 functions in a "command response" mode, which is a mode where its transmission of remote communication device 110, e.g., tag or marker, data to controller processor module 108 is restricted to when controller processor module 108 sends a request to that REM 102 or to a set of REMs 102. Alternatively, or in addition, controller processor module 108 can send a control command to instruct one or more of the plurality of REMs 102 to function in an "auto" mode, which is a mode where tag events are reported in real time to the controller processor module 108. Alternatively, or in addition, controller processor module 108 can send a control command to instruct one or more of the plurality of REMs 102 to function in a "test" mode, which is a mode where the REMs 102 are configured for execution of various tests or diagnostics, such as output signal validity, antenna validity, antenna type and the like.

Controller processor module 108 also can send a control command, e.g., configuration command, to instruct a REM 102 to configure an interrogation zone 104. The configuration command can contain configuration information, e.g., relating to the transmit power output, synthesizer timing, antenna timing, etc., of REM 102.

Controller processor module 108 also can send control command, such as a tag "search request" command, to search for a certain number of tags, or to locate a group of tags having a certain characteristic, such as a group priority identifier. A customer can customize the tag "search request" command to reflect a multitude of search parameters important to that customer. Based on the search conditions received, REM 102 can transmit an inquiry to one or more remote communication devices 110 that contain a control command to set the operational mode of one or more of remote communication devices 110. For example, the control command may instruct the remote communication devices 110 to transition to a power down mode, a power up mode, a "stand-by" mode, a test mode, a broadcast mode and the like.

In addition, controller processor module 108 can be configured to receive a detection signal, e.g., a response having the requested tag data, which can be as a result of a search request command, from a REM 102. In turn, controller processor module 108 can transmit the requested tag data to a customer's inventory control system via a customer's network 112.

In this way, controller processor module 108 provides for tag-data management and radio engine management of the RFID system 100. In addition, the controller processor module 108 provides the processing required by a customer to satisfy that customer's business rules and maintains a single point of contact to the customer's network as compared to the traditional standalone readers, where each standalone reader requires a network connection. This advantageously minimizes the number of RFID network connections required in the customer's location and the amount of data traffic on a customer's network. Controller processor module 108 provides for flexible deployment as it may be mounted in most locations based on individual customer use cases. Each REM 102 may connect to a single antenna or multiple antennas using optional multiplexing capability.

The distribution of the plurality of REMs 102 combined with the centralized controller processor module 108 that implements the network control and processing function of multiple traditional standalone RFID readers provides a RFID infrastructure that lowers the cost of RFID system deployment and simplifies customer integration.

The present invention can be realized in hardware, software, or a combination of hardware and software. An implementation of the method and system of the present invention can be realized in a centralized fashion in one computer system or in a distributed fashion where different elements are spread across several interconnected computer systems. Any kind of computer system, or other apparatus adapted for carrying out the methods described herein, is suited to perform the functions described herein.

## Claims

1. A radio frequency identification, RFID, system (100) for communication with at least one remote communication device (110), the system comprising:
at least one radio engine module, REM (102), the at least one radio engine module (102) including:
a signal generator (224) for synthesizing radio frequency signals to be transmitted to the at least one remote communication device (110); and
a receiver (124B, 209, 226, 228, 230) for receiving radio frequency signals transmitted by the at least one remote communication device (110); and,
a controller (108) separate from and in communication with the at least one radio engine module (102), the controller managing the transmission of information with the at least one radio engine module (102),
**characterized in that**
the controller (108) is adapted to transmit a radio engine module control command to the at least one radio engine module (102),
wherein the radio engine module control command instructs the at least one radio engine module (102) to operate
in a request response mode, wherein its transmission of remote communication device (110) data to controller processor module (108) is restricted to when controller processor module (108) sends a request to one or more REMs
and/or in an auto response mode, wherein tag events are reported in real time to the controller processor module (108)
and/or in a test mode, wherein the REMs (102) are configured for execution of various tests or diagnostics, such as output signal validity, antenna validity and/or antenna type.

2. The RFID system of claim 1, wherein the test mode is one of an antenna validity test and an antenna identification test.

3. The RFID system of claim 1, wherein the radio engine module control command is an operational command for the at least one remote communication device (110).

4. The RFID system of claim 1, wherein the controller (108) further communicates with a network (112), the communication with the network (112) being based on communication with the at least one radio engine module (102).

5. The RFID system of claim 1, wherein the controller (108) further aggregates communication from a plurality of radio engine modules (102) for communication to a network (112).

6. The RFID system of claim 1, wherein the radio engine module (102) includes a logic device (234) for wave-shaping command signals from the controller (108).

7. A method for using a controller (108) to control the transmission of information with at least one radio engine module (102), the method comprising:
receiving a response signal by the at least one radio engine module (102) from at least one remote communication device (110); and
sending remote communication device data to the controller (108) from the at least one radio engine module (102),
**characterized in that**
the method further includes sending a control command from the controller (108) to the at least one radio engine module, REM (102),
wherein the command is a radio engine module configuration command to set the radio engine module (102) in
either a request response mode, wherein its transmission of remote communication device data to controller processor module (108) is restricted to when controller processor module (108) sends a request to one or more REMs,
and/or an auto response mode, wherein tag events are reported in real time to the controller processor module (108)
and/or a test mode, wherein the REMs (102) are configured for execution of various tests or diagnostics, such as output signal validity, antenna validity and/or antenna type.

## Patentansprüche

1. Radiofrequenzidentifikations-, RFID-, System (100) zur Kommunikation mit mindestens einer entfernt aufgestellten Kommunikationsvorrichtung (110), wobei das System Folgendes umfasst:
mindestens ein Radio-Engine-Modul, REM, (102), wobei das mindestens eine Radio-Engine-Modul (102) Folgendes umfasst:
einen Signalgenerator (224) zum Synthetisieren von Radiofrequenzsignalen, die an die mindestens eine entfernt aufgestellte Kommunikationsvorrichtung (110) zu übertragen sind; und
einen Empfänger (124B, 209, 226, 228, 230) zum Empfangen von Radiofrequenzsignalen, die von der mindestens einen entfernt aufgestellten Kommunikationsvorrichtung (110) übertragen werden; und
ein Steuergerät (108), das von dem mindestens einen Radio-Engine-Modul (102) getrennt ist und damit in Verbindung steht, wobei das Steuergerät die Übertragung von Informationen mit dem mindestens einen Radio-Engine-Modul (102) verwaltet,
**dadurch gekennzeichnet, dass**
das Steuergerät (108) dazu geeignet ist, einen Radio-Engine-Modul-Steuerbefehl an das mindestens eine Radio-Engine-Modul (102) zu übertragen,
wobei der Radio-Engine-Modul-Steuerbefehl das mindestens eine Radio-Engine-Modul (102) anweist
in einem Anfragenantwortmodus zu funktionieren, bei dem seine Übertragung von Daten der entfernt aufgestellten Kommunikationsvorrichtung (110) an das Steuergerät-Prozessormodul (108) darauf beschränkt ist, wenn das Steuergerät-Prozessormodul (108) eine Anfrage an ein oder mehrere REMs sendet,
und/oder in einem automatischen Antwortmodus zu funktionieren, bei dem Kennzeichenereignisse dem Steuergerät-Prozessormodul (108) in Echtzeit gemeldet werden,
und/oder in einem Testmodus zu funktionieren, bei dem die REMs (102) zur Ausführung von diversen Tests oder Diagnosen, wie etwa der Ausgangssignalgültigkeit, der Antennengültigkeit und/oder der Antennenart, konfiguriert sind.

2. RFID-System nach Anspruch 1, wobei der Testmodus entweder ein Antennengültigkeitstest oder ein Antennenidentifikationstest ist.

3. RFID-System nach Anspruch 1, wobei der Steuerbefehl des Radio-Engine-Moduls ein Betriebsbefehl für die mindestens eine entfernt aufgestellte Kommunikationsvorrichtung (110) ist.

4. RFID-System nach Anspruch 1, wobei das Steuergerät (108) ferner mit einem Netzwerk (112) kommuniziert, wobei die Kommunikation mit dem Netzwerk (112) auf einer Kommunikation mit dem mindestens einen Radio-Engine-Modul (102) basiert.

5. RFID-System nach Anspruch 1, wobei das Steuergerät (108) ferner eine Kommunikation von einer Vielzahl von Radio-Engine-Modulen (102) für eine Kommunikation mit einem Netzwerk (112) zusammenstellt.

6. RFID-System nach Anspruch 1, wobei das Radio-Engine-Modul (102) eine Logikvorrichtung (234) zum Wellenformgestalten von Befehlssignalen aus dem Steuergerät (108) umfasst.

7. Verfahren zum Verwenden eines Steuergeräts (108) zum Steuern der Übertragung von Informationen mit mindestens einem Radio-Engine-Modul (102), wobei das Verfahren folgende Schritte umfasst:
Empfangen eines Antwortsignals durch das mindestens eine Radio-Engine-Modul (102) von mindestens einer entfernt aufgestellten Kommunikationsvorrichtung (110); und
Senden von Daten der entfernt aufgestellten Kommunikationsvorrichtung an das Steuergerät (108) von dem mindestens einen Radio-Engine-Modul (102),
**dadurch gekennzeichnet, dass**
das Verfahren ferner das Senden eines Steuerbefehls von dem Steuergerät (108) an das mindestens eine Radio-Engine-Modul, REM, (102), umfasst,
wobei der Befehl ein Radio-Engine-Modul-Konfigurationsbefehl ist, das Radio-Engine-Modul (102) entweder
in einen Anfragenantwortmodus zu versetzen, bei dem seine Übertragung von Daten der entfernt aufgestellten Kommunikationsvorrichtung an das Steuergerät-Prozessormodul (108) darauf eingeschränkt ist, wenn das Steuergerät-Prozessormodul (108) eine Anfrage an ein oder mehrere REMs sendet,
und/oder in einen automatischen Antwortmodus zu versetzen, bei dem Kennzeichenereignisse dem Steuergerät-Prozessormodul (108) in Echtzeit gemeldet werden,
und/oder in einen Testmodus zu versetzen, bei dem die REMs (102) zur Ausführung von diversen Tests oder Diagnosen, wie etwa der Ausgangssignalgültigkeit, der Antennengültigkeit und/oder der Antennenart, konfiguriert sind.

## Revendications

1. Système d'identification par radiofréquence (IRF) (100) pour communiquer avec au moins un dispositif de communication à distance, le système comprenant :
au moins un module de moteur radio (MMR) (102), ledit au moins un module de moteur radio (102) comprenant :
un générateur de signaux (224) pour synthétiser des signaux de radiofréquence à transmettre audit au moins un dispositif de communication à distance (110) ; et
un récepteur (124B, 209, 226, 228, 230), le récepteur permettant de recevoir des signaux de radiofréquence transmis par ledit au moins un dispositif de communication à distance (110) ; et,
un contrôleur (108) séparé dudit au moins un module de moteur radio (102) et qui communique avec celui-ci, le contrôleur gérant la transmission d'informations avec ledit au moins un module de moteur radio (102),
**caractérisé en ce que**
le contrôleur (108) transmet une commande de contrôle du module de moteur radio audit au moins un module de moteur radio (102), dans lequel la commande de contrôle du module de moteur radio commande audit au moins un module de moteur radio (102) de fonctionner en mode de réponse à une demande, dans lequel sa transmission de données de dispositif de communication à distance (110) au module processeur du contrôleur (108) est limitée au moment où le module processeur du contrôleur (108) envoie une demande à un ou plusieurs MMR, et/ou en mode de réponse automatique, dans lequel des événements de référence sont signalés en temps réel au module processeur du contrôleur (108), et/ou en mode de test, dans lequel les MMR (102) sont configurés pour l'exécution de différents tests ou diagnostics, comme la validité du signal de sortie, la validité de l'antenne et/ou le type d'antenne.

2. Système IRF selon la revendication 1, dans lequel le mode de test est un test de validité de l'antenne ou un test d'identification d'antenne.

3. Système IRF selon la revendication 1, dans lequel la commande de contrôle du module de moteur radio est une commande opérationnelle pour ledit au moins un dispositif de communication à distance (110).

4. Système IRF selon la revendication 1, dans lequel le contrôleur (108) communique en outre avec un réseau (112), la communication avec le réseau (112) étant basée sur la communication avec ledit au moins un module de moteur radio (102).

5. Système IRF selon la revendication 1, dans lequel le contrôleur (108) rassemble en outre des communications provenant d'une pluralité de modules de moteur radio (102) pour la communication à destination d'un réseau (112).

6. Système IRF selon la revendication 1, dans lequel le module de moteur radio (102) comprend un dispositif logique (234) pour mettre sous forme d'ondes des signaux de commande provenant du contrôleur (108).

7. Procédé d'utilisation d'un contrôleur (108) pour contrôler la transmission d'informations avec au moins un module de moteur radio (102), le procédé consistant :
à recevoir un signal de réponse par ledit au moins un module de moteur radio (102) provenant d'au moins un dispositif de communication à distance (110) ; et
à envoyer des données de dispositif de communication à distance au contrôleur (108) à partir dudit au moins un module de moteur radio (102),
**caractérisé en ce que**
le procédé comprend en outre l'envoie d'une commande de contrôle depuis le contrôleur (108) vers ledit au moins un module de moteur radio (102), dans lequel la commande est une commande de configuration du module de moteur radio pour régler le module de moteur radio (102) en mode de réponse à une demande, dans lequel sa transmission de données de dispositif de communication à distance au module processeur du contrôleur (108) est limitée au moment où le module processeur du contrôleur (108) envoie une demande à un ou plusieurs MMR, et/ou en mode de réponse automatique,
dans lequel des évènements de référence sont signalés en temps réel au module processeur du contrôleur (108), et/ou en mode de test, dans lequel les MMR (102) sont configurés pour l'exécution de différents tests ou diagnostics, comme la validité du signal de sortie, la validité de l'antenne et/ou le type d'antenne.
